# DEMANDE DE BREVET EUROPEEN

(11) **EP 4 748 805 A1**
(43) Date de publication de la demande: **27.05.2026**
(21) Numéro de dépôt: 25216770.5
(22) Date de dépôt: 18.11.2025
(51) Int. Cl.: C03B 19/09, A44C 27/00, C03B 40/02, C03B 40/00, G04B 19/12

(54) **PROCÉDÉ DE FABRICATION D'UN COMPOSANT DÉCORATIF D'HORLOGERIE OU DE JOAILLERIE EN ÉMAIL**

(30) Priorité: 26.11.2024 CH 12802024
(71) Demandeur: Richemont International S.A., 1752 Villars-sur-Glâne (CH)
(72) Inventeur: DUBAS, Pierre-Alexandre, 18130 Saint-Denis-de-Palin (FR); PAUL, Basile, 01170 GEX (FR); MORARD, Vivien, 74960 Annecy (FR)
(74) Mandataire: Novagraaf International SA

(57) **Abrégé**

Procédé de fabrication d'un composant décoratif d'horlogerie ou de joaillerie en émail, le procédé de fabrication comprenant au moins les étapes consistant à :
• se munir d'un moule à préformes et y verser une composition comprenant une poudre à émailler,
• former une préforme en chauffant la composition à une température d'agglomération, strictement inférieure à la température de fusion,
• effectuer un refroidissement et/ou un démoulage de la préforme,
• former un bloc d'émail en chauffant la préforme selon un profil de température agencé pour former un bloc d'émail vitrifié,
• démouler le bloc d'émail.

## Description

### Domaine technique de l'invention

La présente invention concerne de manière générale la fabrication des émaux ou composants en émail, ou composants revêtus d'émail, c'est-à-dire émaillés, et plus particulièrement des émaux ou composants en émail pour des pièces d'horlogerie tels que des composants d'habillage comme des cadrans, des aiguilles ou des décors fixes ou animés, ou des pièces de joaillerie, tels que des bagues, des bracelets, des boucles d'oreilles ou des colliers, ou encore pour des instruments d'écriture.

### État de la technique

Il est connu dans l'art antérieur des procédés de fabrication d'émaux ou de composants en émail, comme divulgué dans le document FR3048354A1. En contrepartie, ces procédés connus peuvent conduire à des pièces en émail dont la couleur n'est pas homogène. De plus, l'homme du métier peut être confronté à la difficulté de prédire la couleur finale que pourra avoir la pièce émaillée (c'est-à-dire vitrifiée), car de fortes variations de couleur interviennent lors de la cuisson des pièces. Dans ces procédés, il est également fait usage de compositions à l'état initial de poudres, ce qui complique la logistique et/ou la manipulation. Enfin, pour obtenir des blocs émaillés ou vitrifiés d'une forme particulière, il est nécessaire de prévoir des moules, ce qui peut augmenter les coûts de fabrication.

### Exposé de l'invention

Un but de la présente invention est de répondre aux inconvénients de l'art antérieur mentionnés ci-dessus et en particulier, tout d'abord, de proposer un procédé de fabrication qui peut permettre de fabriquer un bloc d'émail d'une couleur homogène et/ou dont la couleur finale peut être plus facilement prédite, et/ou qui peut simplifier la logistique et/ou les manipulations, et/ou qui peut réduire les coûts.

Pour cela un premier aspect de l'invention concerne un procédé de fabrication d'un composant décoratif d'horlogerie ou de joaillerie en émail.

Selon un mode de réalisation, un procédé de fabrication d'un composant décoratif d'horlogerie ou de joaillerie en émail, comprend au moins les étapes consistant à :
- se munir d'un moule à préformes et y verser une composition comprenant une poudre à émailler,
- former une préforme en chauffant la composition à une température d'agglomération, strictement inférieure à la température de fusion,
- effectuer un refroidissement et/ou un démoulage de la préforme (non vitrifiée),
- former un bloc d'émail en chauffant la préforme selon un profil de température agencé pour former un bloc d'émail vitrifié,
- démouler le bloc d'émail.

La composition pulvérulente est donc frittée pour former la préforme. Selon la mise en œuvre ci-dessus, dans une première étape, la composition de poudre à émailler, en tout ou partie pulvérulente, est versée dans le moule à préformes et chauffée dans un four jusqu'à ce que des grains composant la poudre à émailler s'agglomèrent à la température d'agglomération. Lors de cette première étape, la température de la composition n'atteint pas la température de fusion de l'ensemble de la composition comprenant la poudre à émailler. Bien que la température de fusion de chacun des composants de l'émail puisse différer et que les tailles des grains de poudre d'émail ne soient pas identiques, le volume de composition versé ne passe pas dans une phase liquide par une fusion, c'est-à-dire que les grains s'agglomèrent par frittage et qu'une phase solide existe constamment pendant toute cette première étape de formation des préformes. Autrement dit, la première étape n'exclue pas un frittage en phase liquide, avec un ou plusieurs composant de la composition pulvérulente ayant une température de fusion bien plus basse que la température de fusion des autres composants. Ainsi, ce n'est pas la fusion de l'ensemble des grains, mais la consolidation par action de la chaleur résultant de la diffusion des atomes composant les grains de poudre d'émail qui donne sa forme et sa tenue mécanique à la préforme à l'issue de cette première cuisson. Autrement dit, à la différence des corps verts qui ne sont pas frittés, les préformes à ce stade du procédé ne sont pas seulement séchées mais agglomérées ou consolidées par l'effet du frittage ; les préformes à ce stade sont manipulables sans s'effondrer et peuvent supporter leur propre poids, sans ajout nécessaire de liant. Cette cuisson mesurée permet de donner une préforme que l'on peut qualifier de non vitrifiée ou non complètement vitrifiée, plus compacte et plus dense qu'une poudre, et qui puisse en même temps épouser la forme du moule à préformes sans y adhérer (notamment en raison du fait que la matière ne s'est pas liquéfiée, elle ne mouille pas le moule). Les préformes sont donc ainsi plus facilement démoulables une fois refroidies, par exemple par le simple effet de la gravité lors du retournement du moule. En ce qui concerne la composition initiale pulvérulente, les grains de la composition peuvent former une composition pulvérulente, mais aussi concassée, ou former un frit selon la taille et la composition des grains.

La formation de la préforme peut comprendre une étape de pré-frittage. Le pré-frittage est une opération thermique préliminaire au frittage qui consiste à agglomérer légèrement les particules d'une poudre, souvent métalliques, pour augmenter sa cohésion avant une étape de compression ou de frittage supplémentaire. Cette étape de pré-frittage procure des préformes manipulables sans s'effondrer et pouvant supporter leur propre poids.

La formation de la préforme peut comprendre une étape de vitrification partielle, où une partie seulement des constituants de la poudre sont vitrifiés et procurent une tenue mécanique. Cette étape de vitrification partielle procure des préformes manipulables sans s'effondrer et pouvant supporter leur propre poids.

Durant une deuxième étape, une fusion complète et homogène de la préforme est préférentiellement atteinte, c'est-à-dire que la préforme est préférentiellement à au moins un instant de l'étape de vitrification dans une phase complètement liquide. Cette phase liquide est ensuite progressivement refroidie.

Un avantage d'un tel procédé en deux étapes de cuisson distinctes, c'est-à-dire comprenant un refroidissement après l'étape de formation de la préforme, est relatif à la couleur du bloc d'émail ainsi obtenu. En effet, la demanderesse s'est aperçue que la couleur de l'émail était homogène. Autrement dit, les blocs d'émail vitrifiés obtenus avec le présent procédé présentent moins de marbrures ou de dégradés de couleur que dans le cas d'un procédé sans obtention d'une préforme intermédiaire.

De plus un autre avantage procuré est d'avoir un aperçu de la couleur de l'émail dès l'obtention d'un produit intermédiaire (la préforme) par la couleur de cette préforme avant la fin de la cuisson du bloc vitrifié.

De plus, obtenir un produit intermédiaire entre la composition pulvérulente et le bloc d'émail vitrifié peut permettre une manipulation, un transport et un stockage de l'émail plus simples et moins dangereux par des préformes plutôt que sous la forme d'une poudre.

Enfin, le démoulage des préformes permet de réutiliser les moules, ce qui contribue à limiter les coûts.

Selon un mode de réalisation, l'étape de refroidissement de la préforme comprend optionnellement l'étape de démoulage des préformes. Les préformes peuvent être démoulées du moule à préformes et placées dans un moule de vitrification pour la seconde cuisson de l'étape de formation des blocs d'émail, ou bien les cuissons peuvent être effectuées dans un même moule.

Le procédé de fabrication peut être défini par les caractéristiques suivantes, prises individuellement ou en combinaison.

Selon un mode de réalisation, l'étape de formation d'une préforme (non vitrifiée) est effectuée en chauffant la composition à au plus une température dite de strain et/ou au plus une température dite de Littleton et/ou au plus 650 °C l'au moins un volume prédéterminé, par exemple à 550 °C pendant 15 heures, et de préférence à 625 °C pendant 1 heure 05, et l'étape de formation d'un bloc d'émail vitrifié est effectuée en chauffant la composition au moins à une température dite d'annealing et/ou au moins une température de transition vitreuse et/ou une température de fusion et/ou au moins 650°C, et de préférence à au moins 800 °C pendant au moins 10 minutes. Selon cette mise en œuvre, la température de strain (déformation en langue française) est la température à laquelle la viscosité est d'environ 10^{14.5} Poises, et/ou la température minimale en-dessous de laquelle un recuit, dans un processus industriel, n'est plus possible puisque le relâchement des contraintes s'y effectue sur une échelle de plusieurs heures. La température de Littleton est celle où la préforme commence à s'effondrer sous son propre poids. Pour une température préférée de 625°C, la cuisson peut être effectuée pendant une durée préférée de 1h05. La formation d'une préforme sous ces paramètres de cuisson garantit un développement de la couleur proche de celle du bloc d'émail final. Particulièrement, le développement des teintes comprises dans un spectre allant du rouge au jaune peut se faire entre 580°C et 650°C.

L'agglomération des particules de la composition pulvérulente composant la préforme est obtenue pour une température minimale de cuisson. Ainsi, le profil de température choisi doit comprendre une cuisson à au moins 400°C, préférentiellement au moins 450°C, plus préférentiellement encore à au moins 500°C.

L'étape suivante de vitrification peut être de préférence effectuée à une température supérieure à la température d'annealing, c'est-à-dire de recuit en langue française, au-dessus de laquelle les contraintes se relâchent dans une échelle de temps inférieure à quelques minutes et/ou à laquelle la viscosité peut être d'environ 10¹³ Poises, et qui est donc la température à atteindre dans un processus industriel pour un recuit. Pour que la vitrification survienne, c'est-à-dire pour obtenir un matériau amorphe, c'est-à-dire un agencement des atomes désordonné, la préforme d'émail peut devoir au moins être chauffée à une température de transition vitreuse du matériau à laquelle il passe d'un état solide ou fragile à un état progressivement visqueux ou caoutchouteux. Un refroidissement brusque du matériau dans cet état permet d'éviter la formation de réseaux atomiques cristallins, en figeant les atomes dans une formation désordonnée caractéristique de l'état visqueux. Le refroidissement peut cependant être mesuré afin de ne pas fragiliser les blocs.

Dans un exemple de réalisation, un four agencé pour cuir la préforme peut chauffer le moule et sa composition pulvérulente progressivement à une vitesse de 70°C/min, avec un palier de 10 minutes à 625°C, jusqu'à 825°C où la préforme est maintenue pendant 1h avant un refroidissement progressif du four de -10°C/minute jusqu'à atteindre 300°C. Dans une réalisation alternative préférée, la température du four peut être progressivement augmentée jusqu'à environ la température de fusion de l'émail, à 1000°C, afin de garantir une bonne homogénéité de l'émail. La vitesse de chauffe est doublée à 140°C/min, avec un palier à 840°C de 15 minutes. Les 1000°C sont maintenus pendant 1 minute. Le refroidissement peut être effectué en ouvrant la porte du four.

Dans un mode de réalisation, l'étape de formation d'une préforme est effectuée à pression atmosphérique.

Dans un mode de réalisation, l'étape de formation de bloc d'émail est effectuée au moins en partie sous vide, par exemple avec une pression absolue d'au plus 50 mbar, d'au plus 30 mbar, d'au plus 25 mbar. La vitrification au moins en partie sous vide permet de réduire les défauts, les porosités et les impuretés du matériau, et donc d'améliorer les propriétés mécaniques de l'émail. La pression baisse dès que le four atteint une température de 500°C, et la pression est remontée à pression atmosphérique lors de la descente de la température.

Selon un mode de réalisation, l'étape de versement de la composition comprenant une poudre à émailler est précédée d'une étape de dosage d'un volume prédéterminé de la composition comprenant une poudre à émailler, de sorte à former des préformes de volume constant. Ainsi, les préformes peuvent servir d'unités de dosage pour la fabrication de blocs d'émail plus gros nécessitant plus que le volume d'une préforme. Ces préformes de volume prédéterminé peuvent simplifier ainsi le dosage et la fabrication des blocs d'émail.

Selon un mode de réalisation, au moins une étape consiste à se munir d'un moule en plâtre réfractaire. L'utilisation d'un matériau réfractaire permet de supporter des températures de plusieurs centaines de degrés Celsius. Le moule en plâtre réfractaire comprend, en pourcentage massique :
- entre 10 et 30% de silice cristalline, et de préférence 20%,
- entre 4 et 8% de kaolin, et de préférence 6%,
- entre 5 et 9% de pyrophyllite, et de préférence 7%,
- entre 0.5 et 1.5% de mica, et de préférence 1%,
- entre 4 et 8% de wollastonite, et de préférence 6%,
- entre 10 et 16% d'oxide d'alumine, et de préférence 13%,
- entre 2 et 4% de smectite, et de préférence 3%,
- entre 30 et 50% de plâtre de Paris, et de préférence 40%
- entre 3 et 5% de fibres réfractaires, et de préférence 4%. Les fibres réfractaires peuvent par exemple être des fibres de verre ou des fibres de roche.

Un autre but de la présente invention est de proposer un procédé de fabrication d'un bloc d'émail facilement démoulable.

Selon un mode de réalisation, l'étape de formation du bloc d'émail comprend les étapes consistant à :
- Se munir d'un moule de vitrification, de préférence en plâtre réfractaire,
- Revêtir le moule de vitrification d'une composition comprenant du nitrure de bore, préférentiellement comprenant entre 10% et 25% en masse de nitrure de bore,
- Placer la préforme dans le moule de vitrification revêtu,
- Former le bloc d'émail en chauffant la préforme dans le moule de vitrification revêtu,
- Réutiliser le moule de vitrification revêtu en répétant au moins une fois les deux étapes précédentes avec au moins une autre préforme d'émail.
Le revêtement du moule de vitrification par une base de nitrure de bore permet de démouler plus facilement le bloc d'émail du moule de vitrification. En effet, en raison de la température élevée auquel est soumis le matériau durant l'étape de vitrification, le moule de vitrification non revêtu est détruit en fin de procédé pour extraire les blocs d'émail formés. Afin de réutiliser le moule, lors de sa fabrication, le revêtement peut être déposé par exemple en une seule fois après refroidissement du moule de vitrification en plâtre, avant sa première utilisation. Une fois les premiers blocs d'émail démoulés, de nouvelles préformes peuvent y être de nouveau déposées afin d'être vitrifiées. Le remplacement des moules de vitrification est donc moins fréquent et le coût de traitement des moules usagés est moins élevé que lors d'une utilisation de moules non revêtu.

Selon un mode de réalisation, l'étape de formation de la préforme (non vitrifiée) comprend les étapes consistant à :
- Se munir d'un moule à préformes, de préférence en plâtre réfractaire,
- Revêtir, par exemple par trempage, pulvérisation, impression ou saupoudrage, le moule à préformes d'une composition comprenant du nitrure de bore, préférentiellement comprenant entre 10% et 25% en masse de nitrure de bore,

- Placer le volume prédéterminé d'une composition comprenant une poudre à émailler dans le moule à préformes revêtu,
- Former la préforme (non vitrifiée) en chauffant la préforme dans le moule à préformes revêtu,
- Réutiliser le moule à préformes revêtu en répétant au moins une fois les deux étapes précédentes avec au moins un autre volume prédéterminé d'une composition comprenant une poudre à émailler.

Selon un mode de réalisation, la composition du revêtement comprend en outre, en pourcentage massique :
plus de 40% d'eau et de préférence plus de 50% d'eau,
entre 5 et 10% de bentonite,
entre 0.1 et 1% de sesquioxyde de bore (B₂O₃).

Selon un mode de réalisation, une étape ultérieure de conformation du bloc d'émail comprend une étape de recuit du bloc d'émail. Le recuit permet d'améliorer les propriétés mécaniques du bloc d'émail. Préférentiellement, le recuit est effectué au moins à la température d'annealing (recuit en langue française), pour laquelle la relaxation des contraintes internes se produit en quelques minutes.

Selon un mode de réalisation, l'étape de conformation comprend une étape de pressage du bloc d'émail, de préférence pour former un plat sur le bloc d'émail. L'ajout d'une face plane permet de faciliter l'usinage et le travail ultérieur du bloc d'émail.

Selon un mode de réalisation, l'étape consistant à se munir d'un moule à préformes comprend une étape consistant à former au moins un bossage, c'est-à-dire une forme convexe ou en saillie, sur le fond de moule. Cette mise en œuvre permet au moule à préformes de mieux transmettre la chaleur vers la poudre à émailler lors de l'étape de formation de la préforme. Cette meilleure diffusion de chaleur dans la préforme contribue à diminuer les écarts de température à l'intérieur de la préforme. Les couleurs de l'émail révélées lors de la cuisson variant d'une température à une autre, une température homogène dans la préforme rend la couleur du bloc vitrifié d'émail ainsi obtenu elle-même homogène.
En outre, la forme du moule à préformes comprend au moins un évasement afin de faciliter le démoulage des préformes.

Selon un mode de réalisation, la poudre à émailler comprend en pourcentage massique, au moins 40% de silice, de l'alumine, du calcium, du sodium, de l'oxyde de titane, et au moins un colorant. Les colorants peuvent être des oxydes métalliques.

Un second aspect de l'invention concerne une pièce de joaillerie ou d'horlogerie comprenant un composant décoratif en émail fabriqué selon le procédé de fabrication décrit ci-dessus, tel qu'une forme à quatre lobes, tel qu'un trèfle à quatre feuilles.

### Description des figures

D'autres caractéristiques et avantages de la présente invention apparaîtront plus clairement à la lecture de la description détaillée qui suit de mode(s) de réalisation de l'invention donné(s) à titre d'exemple(s) nullement limitatif(s) et illustré(s) par les dessins annexés, dans lesquels :
[fig. 1] représente un composant décoratif en émail fabriqué selon le procédé selon l'invention;
[fig. 2] représente un diagramme des étapes du procédé de fabrication selon l'invention ;
[fig. 3] représente un graphique d'un profil de température d'un four en fonction du temps lors d'une étape de formation d'une préforme du procédé de la figure 2;
[fig. 4] représente un graphique de la température d'un four en fonction du temps d'un premier mode de réalisation d'une étape de formation d'un bloc d'émail du procédé de la figure 2;
[fig. 5] représente un graphique de la température d'un four en fonction du temps d'un second mode de réalisation de l'étape de formation du bloc d'émail du procédé de la figure 2;
[fig. 6] représente une vue en coupe d'un moule de vitrification selon la présente invention ;
[fig. 7] représente une vue en coupe d'un moule à préformes selon la présente invention.

### Description détaillée de mode(s) de réalisation

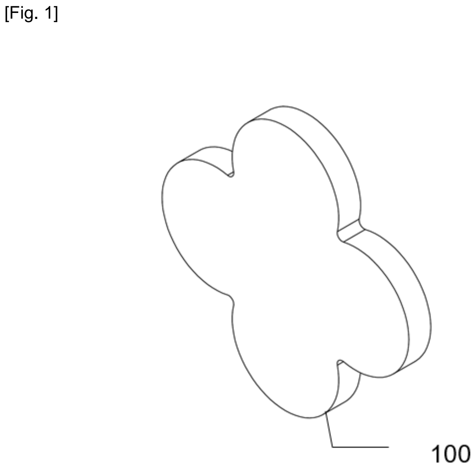

La figure 1 représente un composant décoratif en émail 100 fabriqué selon le procédé selon l'invention. Le composant décoratif en émail 100 peut comprendre ou former des lobes, et au moins une face plane. Le composant décoratif en émail 100 peut avoir été usiné ou découpé dans un bloc d'émail vitrifié, par exemple par découpe laser ou usinage laser. Pour présenter une bonne qualité, le composant décoratif en émail 100 doit posséder une couleur et/ou une composition homogènes, c'est-à-dire dépourvue(s) de marbrures et/ou de porosités.

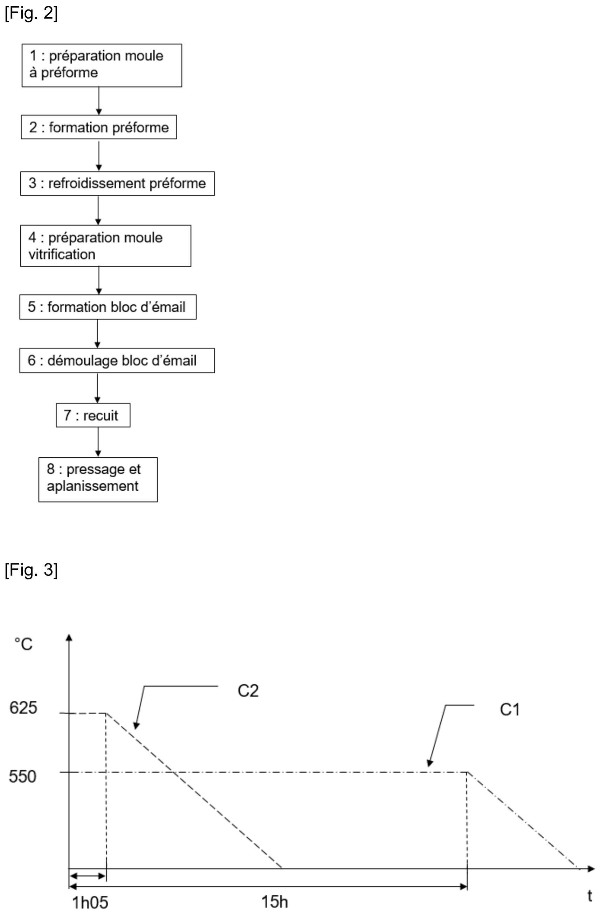

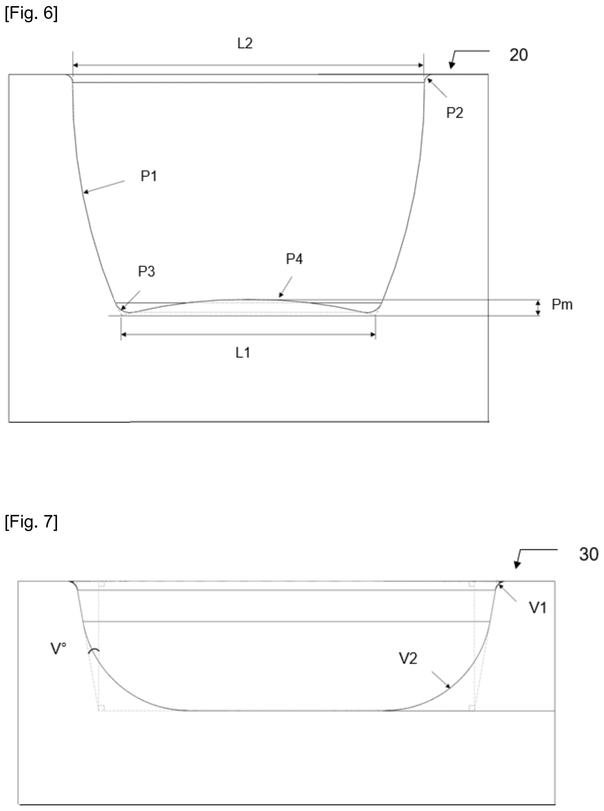

La figure 2 représente différentes étapes d'un procédé de fabrication selon l'invention et leur enchaînement.
L'étape 1 consiste à se munir d'un moule à préformes 20 en plâtre réfractaire illustré à la figure 6, dans lequel on verse une composition au moins en partie pulvérulente (une poudre d'émail ou une poudre à émailler). Classiquement, la composition pulvérulente contient au moins 40% de silice, de l'alumine, du calcium, du sodium, de l'oxyde de titane, et au moins un colorant. Le volume de la composition versée peut être prédéterminé.

L'étape 2 consiste à placer le moule et son contenu dans un four et chauffer la composition pour la fritter, et obtenir des préformes monobloc non vitrifiées. Afin de chauffer la composition à une température d'agglomération à laquelle les grains de la composition s'agglomèrent sans fondre, la température du four est réglée pour ne pas atteindre la température de fusion de l'émail, mais être assez élevée pour autoriser une cohésion à la surface des grains de poudre de la composition, pour ainsi former des ponts entre les grains de la poudre. Le volume de poudre acquiert donc une tenue mécanique pour former en quelques sortes un composant ou une préforme à part entière. Les préformes ainsi obtenues sont par la suite refroidies et démoulées du moule à préformes 20 dans l'étape 3. Elles peuvent être manipulées sans risque et facilement stockées avant l'étape 4.

L'étape 4 consiste à se procurer un moule de vitrification 30 en plâtre réfractaire illustré à la figure 7. Il est préférence, mais pas obligatoirement, recouvert sur sa surface en contact avec l'émail d'une composition à base de nitrure de bore. La composition peut comprendre de 10% à 25% de nitrure de bore en concentration massique. La composition est complétée par de l'eau, de la bentonite et du sesquioxyde de bore. La composition forme un revêtement du moule qui aide à démouler facilement les blocs d'émail après leur cuisson de vitrification, et on peut ainsi réutiliser le moule de vitrification 30 après obtention des blocs d'émail pour la cuisson de nouvelles préformes. Le revêtement peut aussi être utilisé sur le moule à préformes 20 selon le même procédé pour faciliter le démoulage des préformes à l'étape 3.

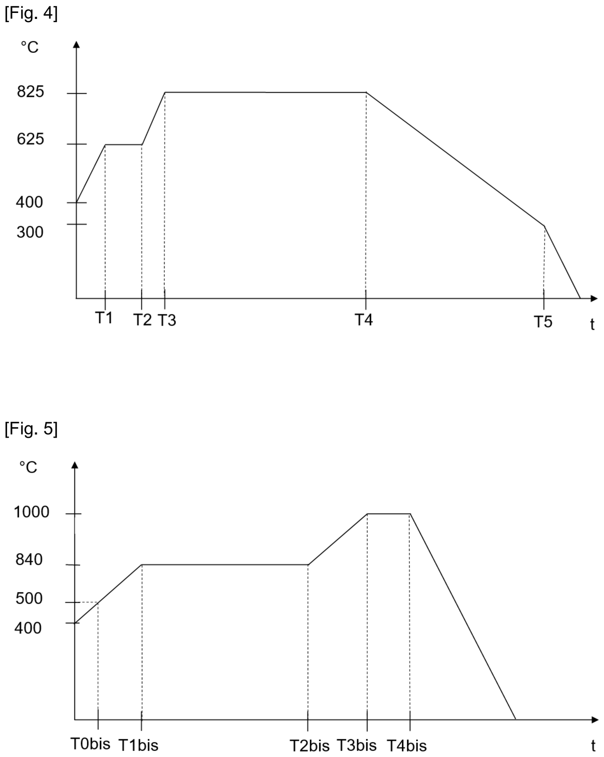

Durant l'étape 5, la préforme est chauffée préférentiellement à une température de fusion de la préforme et au moins à une température de transition vitreuse, par exemple selon l'un ou l'autre des profils de température décrits dans les figures 3 et 4, puis refroidie de sorte à être vitrifiée (au moins en partie) jusqu'à former des blocs d'émail vitrifiés.

L'étape 6 consiste à éventuellement finir de refroidir et démouler les blocs d'émail, qui sortent d'eux-mêmes du moule de vitrification 30 par l'effet de la gravité lorsque le moule de vitrification 30 revêtu de la composition à base de nitrure de bore est retourné. Dans le cas de l'usage d'un moule de vitrification 30 non revêtu, le moule de vitrification 30 devra être détruit pour en extraire les blocs d'émail.

L'étape 7 est une étape de recuit des blocs d'émail pour améliorer leurs propriétés mécaniques, à une température modérée, bien inférieure à la température de fusion, de préférence autour de la température d'annealing (recuit en langue française) de l'émail.

Enfin, les blocs d'émail recuits peuvent être soumis à une étape 8 de pressage et d'aplanissement pour former une face plane, plus facile à positionner, maintenir et usiner et obtenir finalement la pièce 100. Cette étape peut toutefois être effectuée pendant ou simultanément à l'étape 5.

La figure 3 représente un premier profil C1 et un deuxième profil C2 alternatif de température pouvant être appliqués lors du chauffage du four à l'étape 2 de formation d'une préforme. Dans le premier profil de chauffage C1, la composition comprenant la poudre à émailler est enfournée à chaud à 550°C pendant 15h avant un refroidissement à température ambiante hors du four. Dans le deuxième profil de température C2, la composition comprenant la poudre à émailler est enfournée à chaud à 625°C pendant 1h05 avant un refroidissement à température ambiante hors du four. La demanderesse s'est aperçue que le deuxième profil de température de poudre à émailler C2 peut permettre d'obtenir une couleur de préforme plus homogène que le premier profil de température de poudre à émailler C1. De telles cuissons permettent une agglomération des particules de la composition comprenant la poudre à émailler.

Une étape de séchage de la composition n'est pas suffisante pour permettre l'agglomération de la composition en une préforme monobloc qui se supporte elle-même. La composition doit donc subir une cuisson à au moins 400°C, préférentiellement 450°C.

La figure 4 représente un premier profil de température lors du chauffage du four de l'étape 5 de formation d'un bloc d'émail de la figure 2. Le four est préchauffé à 400°C. Les préformes y sont placées lorsque la température du four a atteint 400°C, puis la température du four augmente jusqu'à 625°C, à raison de +70°C/min. A l'instant T1 lorsque la température atteint 625°C, une pompe à vide est mise en marche pour obtenir une pression de 20 mbar dans l'enceinte du four. Le chauffage sous vide des préformes permet d'améliorer la pureté des blocs d'émail (notamment en éliminant les porosités). La température du four forme un palier à 625°C entre T1 et T2 pendant 10 minutes afin de bien homogénéiser la couleur des préformes, avant d'augmenter de nouveau jusqu'à 825°C à l'instant T3, avec une vitesse de +70°C/min. La température du four forme un nouveau palier, à 825°C, pendant 1h jusqu'à l'instant T4. A T4, la pompe à vide est stoppée et cesse de maintenir sous vide l'enceinte du four, et les blocs d'émail sont refroidis progressivement et sous contrôle jusqu'à atteindre 300°C, à raison de -10°C/min jusqu'à l'instant T5. Ils sont par la suite refroidis à température ambiante.

La figure 5 représente un second profil de température lors du chauffage du four de l'étape 5 de la figure 2 permettant une cuisson plus rapide. Comme dans la figure 4, le four est préchauffé à 400°C avant d'y placer les préformes. La température du four augmente jusqu'à 840°C, à une vitesse de 140°C/min. Pendant le chauffage, dès qu'une température du four de 500°C est atteinte à l'instant T0bis, la pompe à vide est mise en route pour obtenir une pression de 20 mbar. Lorsque la température du four atteint 840°C à T1bis, un palier de 15 minutes suit jusqu'à T2bis. La température du four augmente de nouveau à une vitesse de 140°C/min, jusqu'à atteindre 1000°C à l'instant T3bis. Cette température est maintenue pendant 1 minute jusqu'à l'instant T4bis, où la pression remonte à une pression atmosphérique et le four est ouvert pour permettre aux blocs d'émail de refroidir à une température ambiante.

La figure 6 représente une vue en coupe d'un moule à préformes 20. Le moule à préforme 20 présente un diamètre de fond de moule L1 compris entre 13 et 18 mm, de préférence 16 mm, et un diamètre de surface de moule L2 compris entre 19 et 25 mm, de préférence 22 mm. Le moule à préforme 20 peut être recouvert sur sa surface intérieure du revêtement à base de nitrure de bore pour faciliter le démoulage des préformes. Le moule à préformes 20 peut présenter une géométrie particulièrement adaptée au retrait des préformes et évitant également les phénomènes de dégradation de surface du moule par exemple par arrachement au moins localisé de la surface du moule. Il présente ainsi un évasement avec un rayon d'évasement P1, un rayon en surface de moule P2, et un rayon de fond de moule P3 compris entre 0.5 et 2 mm, et de préférence 1 mm.
En outre, le moule à préformes 20 est agencé pour remplir une fonction supplémentaire de diffusion accrue de la chaleur du four vers la composition de poudre à émailler. A cet effet, un bossage, convexe, en fond de moule est prévu pour améliorer la répartition ou le transfert de chaleur depuis moule à préformes 20 vers la composition pulvérulente. Le bossage a un rayon de bossage P4 compris entre 25 et 35 mm, de préférence 30 mm environ, et une hauteur Pm comprise entre 0.5 et 4 mm, et de préférence de 1 mm.

La figure 7 représente une vue en coupe d'un moule de vitrification 30. Le moule de vitrification 30 peut être préférentiellement recouvert sur sa surface intérieure du revêtement à base de nitrure de bore pour faciliter le démoulage des blocs d'émail et autoriser sa réutilisation. Le moule de vitrification 30 présente une géométrie particulièrement adaptée au démoulage des blocs d'émail. A cet effet, un arrondi en fond de moule V2, un arrondi en surface de moule V1, et un angle d'évasement du moule de vitrification V° sont agencés pour faciliter le déplacement du bloc d'émail par effet de la gravité à l'extérieur du moule de vitrification 30 lorsque celui-ci est retourné. Pour une hauteur de moule entre le fond de moule et la surface de moule d'environ 6 mm, V2 est un rayon qui peut être compris entre 3 et 7 mm, de préférence 5 mm ; V1 est un rayon qui peut être compris entre 0.3 et 1.5 mm, de préférence 0.5 mm. Le moule de vitrification 30 est donc évasé, de l'angle d'évasement V° compris entre 5° et 15°, préférentiellement 10°.

Le bossage du moule à préformes 20 permet de fabriquer des préformes creuses. Contrairement au moule à préformes 20 de la figure 6, le moule de vitrification 30 comprend un fond plat, et forme donc des blocs d'émail doté d'une surface plane en fin d'étape 6. Cette surface plane facilite le pressage et l'usinage ultérieurs des blocs d'émail. L'utilisation de préformes creuses n'est pas contraignant pour obtenir des blocs d'émail plats, puisque la fusion opérée à l'étape 5 permet un écoulement de la matière suffisant pour adapter sa forme en une surface inférieure plane.

### Application industrielle

Un procédé de fabrication selon la présente invention, et sa pièce produite sont susceptibles d'application industrielle.

On comprendra que diverses modifications et/ou améliorations évidentes pour l'homme du métier peuvent être apportées aux différents modes de réalisation de l'invention décrits dans la présente description sans sortir du cadre de l'invention.

En particulier, on peut noter que la forme des moules, la composition des moules et du revêtement peuvent évoluer.

## Revendications

1. Procédé de fabrication d'un composant décoratif d'horlogerie ou de joaillerie en émail (100), le procédé de fabrication comprenant au moins les étapes consistant à :
• se munir d'un moule à préformes (20) et y verser une composition comprenant une poudre à émailler,
• former une préforme en chauffant la composition à une température d'agglomération strictement inférieure à la température de fusion,
• effectuer un refroidissement et/ou un démoulage de la préforme,
• former un bloc d'émail en chauffant la préforme selon un profil de température agencé pour former un bloc d'émail vitrifié,
• démouler le bloc d'émail.

2. Procédé de fabrication la revendication 1, dans lequel l'étape de formation de la préforme est effectuée en chauffant la composition à au plus une température dite de strain et/ou au plus une température dite de Littleton et/ou au plus 650 °C l'au moins un volume prédéterminé, par exemple à 550 °C pendant 15 heures, et de préférence à 625 °C pendant 1 heure 05,
et dans lequel l'étape de formation d'un bloc d'émail vitrifié est effectuée en chauffant la composition au moins à une température dite d'annealing et/ou au moins une température de transition vitreuse et/ou une température de fusion et/ou au moins 650°C, et de préférence à au moins 800 °C pendant au moins 10 minutes.

3. Procédé de fabrication selon l'une des revendications 1 ou 2, dans lequel l'étape de formation d'une préforme est effectuée à pression ambiante, et/ou dans lequel l'étape de formation de bloc d'émail est effectuée au moins en partie sous vide, par exemple avec une pression absolue d'au plus 50 mBar, d'au plus 30 mBar, d'au plus 25 mBar.

4. Procédé de fabrication selon les revendications 1 à 3, comprenant au moins une étape consistant à se munir d'un moule en plâtre réfractaire.

5. Procédé de fabrication selon l'une des revendications 1 à 4, dans lequel l'étape de formation du bloc d'émail comprend les étapes consistant à :
• Se munir d'un moule de vitrification (30), de préférence en plâtre réfractaire,
• Revêtir le moule de vitrification (30) d'une composition comprenant du nitrure de bore, préférentiellement comprenant entre 10% et 25% en masse de nitrure de bore,
• Placer la préforme dans le moule de vitrification (30) revêtu,
• Former le bloc d'émail en chauffant la préforme dans le moule de vitrification (30) revêtu,
• Réutiliser le moule de vitrification (30) revêtu en répétant au moins une fois les deux étapes précédentes avec au moins une autre préforme d'émail.

6. Procédé de fabrication selon l'une des revendications 1 à 5, dans lequel l'étape de formation de la préforme comprend les étapes consistant à :
• Se munir du moule à préformes (20), de préférence en plâtre réfractaire,
• Revêtir le moule à préformes (20) d'une composition comprenant du nitrure de bore, préférentiellement comprenant entre 10% et 25% en masse de nitrure de bore,
• Placer le volume prédéterminé d'une composition comprenant une poudre à émailler dans le moule à préformes (20) revêtu,
• Former la préforme en chauffant la préforme dans le moule à préformes (20) revêtu,
• Réutiliser le moule à préformes (20) revêtu en répétant au moins une fois les deux étapes précédentes avec au moins un autre volume prédéterminé d'une composition comprenant une poudre à émailler.

7. Procédé de fabrication selon l'une des revendications 5 ou 6, dans lequel la composition du revêtement comprend en outre, en pourcentage massique :
plus de 40% d'eau et de préférence plus de 50% d'eau,
entre 5 et 10% de bentonite,
entre 0.1 et 1% de sesquioxyde de bore (B₂O₃).

8. Procédé de fabrication selon l'une des revendications 1 à 7, comprenant une étape ultérieure de conformation du bloc d'émail, comprenant une étape de recuit du bloc d'émail.

9. Procédé de fabrication selon l'une des revendications 1 à 8, comprenant une étape de pressage du bloc d'émail, de préférence pour former un plat sur le bloc d'émail.

10. Procédé de fabrication selon l'une des revendications 1 à 9, dans lequel l'étape consistant à se munir d'un moule à préformes (20) comprend une étape consistant à former au moins un bossage sur le fond de moule.

11. Procédé de fabrication selon l'une des revendications 1 à 10, dans lequel la poudre à émailler comprend en pourcentage massique, au moins 40% de silice, de l'alumine, du calcium, du sodium, de l'oxyde de titane, et au moins un colorant.

12. Pièce de joaillerie ou d'horlogerie comprenant un composant décoratif en émail (100) fabriqué selon le procédé de fabrication de l'une des revendications 1 à 11, tel qu'une forme à quatre lobes, tel qu'un trèfle à quatre feuilles.
